# EUROPÄISCHE PATENTSCHRIFT

(11) **EP 0 732 642 B1**
(45) Veröffentlichungstag und Bekanntmachung des Hinweises auf die Patenterteilung: **01.03.2000**
(21) Anmeldenummer: 95120473.4
(22) Anmeldetag: 22.12.1995
(51) Int. Cl.: G05D 23/19, G05D 23/13

(54) **Thermostatisches Arbeitselement mit einem elektrischen Heizelement und Verfahren zum Einbringen des elektrischen Heizelementes in ein Gehäuse**
Thermostatic actuator provided with electrical heating means and method for introducing the electrical heating means into a housing
Actionneur thermostatique pourvu d'un élément de chauffage électrique et méthode d'introduction de l'élément de chauffage électrique dans un boîtier

(30) Priorität: 17.01.1995 DE 19501140
(43) Veröffentlichungstag der Anmeldung: 18.09.1996
(73) Patentinhaber: Behr Thermot-tronik GmbH & Co., 70806 Kornwestheim (DE)
(72) Erfinder: Saur, Roland, D-70195 Stuttgart (DE)
(74) Vertreter: Dauster, Hanjörg, Dipl.-Ing.

(56) Entgegenhaltungen:
- EP-A- 0 139 586
- DE-A- 4 233 913
- GB-A- 1 406 677

## Beschreibung

Die Erfindung betrifft ein thermostatisches Arbeitselement mit einem Gehäuse zur Aufnahme eines Dehnstoffes, in welchem ein elektrisches Heizelement angeordnet ist, das mit Anschlußleitungen versehen ist, die in einem sie umhüllenden, eine Öffnung des Bodens des Gehäuses verschließenden Sockel nach außen geführt sind, und ein Verfahren zum Einbringen eines elektrischen Heizelementes in ein Gehäuse.

Ein derartiges thermostatisches Arbeitselement wird insbesondere mit einem Thermostatventil eingesetzt, wie es aus der DE 42 33 913 A1 bekannt ist.

Es ist ein elektrisch beheiztes thermostatisches Arbeitselement bekannt (EP 0 139 586 A1), bei welchem eine Öffnung des Bodens des Gehäuses mit einem Sockel aus Kunststoff verschlossen ist, der die Anschlußleitungen des Heizelementes umhüllt und durch den die Anschlußleitungen nach außen geführt sind. Der Sockel ist als ein gesondertes Bauteil hergestellt. Es wird von außen in eine eine Ringschulter aufweisende Öffnung des Gehäuses unter Zwischenfügen eines Dichtungsringes eingesetzt und mittels eines Umbördelns des äußeren Randes der Öffnung gehalten.

Der Erfindung liegt die Aufgabe zugrunde, eine möglichst einfache Ausbildung zu schaffen, die ein hohes Maß an Dichtheit gegen ein Austreten des Dehnstoffes bietet.

Diese Aufgabe wird dadurch gelöst, daß der Sockel in die Öffnung des Bodens des Gehäuses eingespritzt ist.

Das Anbringen eines eingespritzten Sockels hat den Vorteil, daß der Sockel bereits mit seiner Herstellung montiert ist, ohne daß zusätzliche Montagearbeiten zum Einbringen und Einpassen des Sockels erforderlich sind. Darüber hinaus läßt sich ein derartiger eingespritzter Sockel in einfacher Weise so auslegen, daß ein sehr hohes Maß an Dichtheit erhalten wird.

In Ausgestaltung der Erfindung wird vorgesehen, daß der in den Boden eingespritzte Sockel mit einem die Anschlußleitungen umhüllenden Ansatz nach außen ragt. Dadurch wird erreicht, daß die Anschlußleitungen einerseits über eine relativ große Länge von dem eingespritzten Sockel umhüllt werden, was zu einem hohen Maß an Dichtheit führt, während zum anderen die Anschlußleitungen sehr sicher gehalten sind, so daß die Befestigungsstellen zwischen den Anschlußleitungen und dem Heizelement von Zugkräften entlastet werden, die auf die Anschlußleitungen ausgeübt werden.

In weiterer Ausgestaltung der Erfindung wird vorgesehen, daß der angespritzte Sockel einen dem Boden des Gehäuses zugewandten Rand des Heizelementes einfaßt. Damit wird auch das Heizelement von dem eingespritzten Sockel gehalten und in dem Gehäuse fixiert.

In zweckmäßiger Ausgestaltung der Erfindung wird vorgesehen, daß der Sockel im Innern des Gehäuses den Boden überdeckt. Damit werden relativ große Dichtflächen zwischen dem Sockel und dem Gehäuse erhalten. Zum gleichen Zweck wird in weiterer Ausgestaltung vorgesehen, daß der Sockel im Innern des Gehäuses einen an den Boden anschließenden Randbereich der Innenwandung des Gehäuses überdeckt.

In weiterer Ausgestaltung der Erfindung wird vorgesehen, daß die Öffnung des Bodens mit wenigstens einer umlaufenden Ringnut versehen ist, die von dem Material des eingespritzten Sockels ausgefüllt ist. Damit wird eine formschlüssige Verbindung zwischen dem eingespritzten Sockel und dem Gehäuse erhalten, während außerdem die Dichtflächen noch einmal vergrößert werden.

In weiterer Ausgestaltung der Erfindung wird vorgesehen, daß der in die Öffnung des Bodens des Gehäuses eingespritzte Sokkel einteilig mit einer das Gehäuse außen einfassenden Kappe hergestellt ist. Mit einer derartigen angeformten Kappe läßt sich einerseits die Dichtheit weiter erhöhen, während andererseits die wirksame Fühlfläche des Gehäuses des thermostatischen Arbeitselementes durch Dimensionierung der axialen Länge der Kappe festgelegt werden kann. Bei einer vorteilhaften Weiterbildung wird dabei vorgesehen, daß die Kappe mit wenigstens einer Aufnahme für ein Zusatzelement versehen ist. Ein derartiges Zusatzelement kann beispielsweise ein Dichtring o.dgl. sein.

In weiterer Ausgestaltung der Erfindung wird vorgesehen, daß der dem Innenraum des Gehäuses zugewandte Bereich des Sockels mit einer an die Innenwand des Gehäuses und/oder an die Außenflächen des Trägerkörpers anschließenden Abdichtmasse versehen ist. Diese Abdichtmasse, die ein auspolymerisierbarer, vorzugsweise klebender Kunststoff ist, führt zu einer weiteren Erhöhung der Dichtheit mittels der zusätzlichen, dauerelastischen Eigenschaften aufweisenden Abdichtmasse, die die Dichtheit auch über eine längere Lebensdauer des thermostatischen Arbeitselementes gewährleistet.

In einer weiteren Ausgestaltung betrifft die Erfindung ein Verfahren zum Einbringen eines elektrischen Heizelementes in ein Gehäuse eines thermostatischen Arbeitselementes, das dadurch gekennzeichnet ist, daß das mit den Anschlußleitungen versehene Heizelement in einem es einbettenden Kern gehalten und mit dem Kern in das Gehäuse eingeführt wird, wobei der Kern, das Gehäuse und ein Formenteil zu einer Gießform zusammengefügt werden, in die ein die Aussparung des Bodens verschließender und die Anschlußleitungen umhüllender Sockel aus Kunststoff eingespritzt wird.

In weiterer Ausgestaltung der Erfindung wird vorgesehen, daß vor dem Einspritzen des Sockels die Wandungen des Gehäuses und/oder die umspritzende Fläche des Heizelementes mit einem Haftvermittler versehen werden. Dieser Haftvermittler führt dazu, daß eine haftende Verbindung zwischen dem eingespritzten Sockel und den Wandungen des Gehäuses und/oder dem Trägerkörper des Heizelementes erhalten wird.

Weitere Merkmale und Vorteile der Erfindung ergeben sich aus der nachfolgenden Beschreibung des in der Zeichnung dargestellten Ausführungsbeispiels.

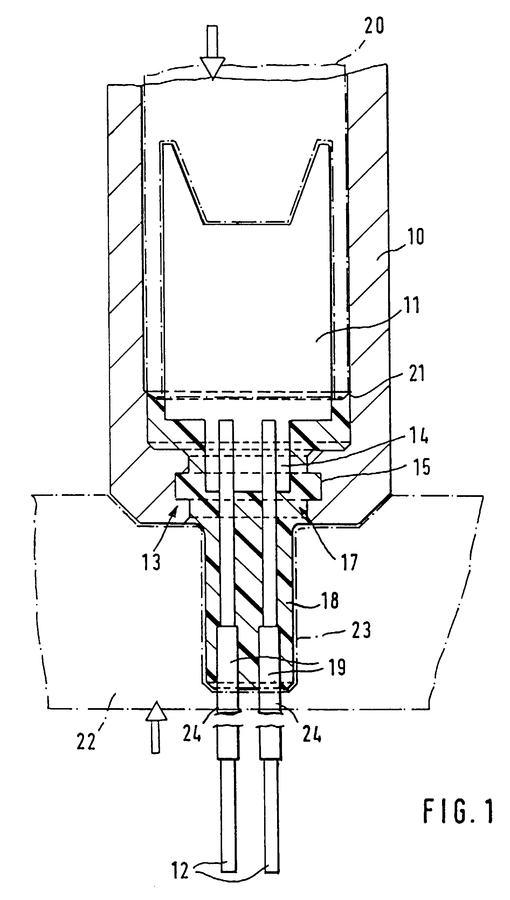

- Fig. 1: zeigt einen Teilschnitt durch ein Gehäuse eines thermostatischen Arbeitselementes mit einem Heizelement und einem eingespritzten Sockel, wobei die für das Einspritzen geschaffene, durch das Gehäuse ergänzte Gießform strichpunktiert dargestellt ist, und
- Fig. 2: einen Teilschnitt durch ein Gehäuse eines thermostatischen Arbeitselementes, dessen Sockel eine das Gehäuse in seinem Bedienbereich einfassende Klappe bildet.

Das in der Zeichnung in etwa 20-facher Vergrößerung dargestellte Gehäuse (10) ist aus Metall hergestellt. Es besitzt eine topfartige Gestalt mit einem Boden und einer nicht dargestellten offenen Seite. Die offene Seite ist üblicherweise mit einem Führungsteil für einen Arbeitskolben verschlossen, wobei zwischen dem Führungsteil und dem Gehäuse eine sackartige Membran vorgesehen ist, die den Arbeitskolben aufnimmt. Innerhalb des Gehäuses wird ein Dehnstoff angeordnet, insbesondere eine Wachsmischung, die in einem durch die Mischung des Wachses vorgebbaren Temperaturbereich ihren Aggregatzustand ändert und dabei den Arbeitskolben austreibt.

Innerhalb des Gehäuses ist ferner ein elektrisches Heizelement (11) angeordnet, das bei dem Ausführungsbeispiel aus einem plattenförmigen Trägerkörper besteht, auf welchem ein nicht dargestellter, mäanderförmig geführter Heizwiderstand in Form einer Schicht aufgetragen ist. An den Heizwiderstand sind zwei Anschlußleitungen (12) angelötet, die durch eine Öffnung (13) des Bodens des Gehäuses (10) nach außen geführt sind. Die Anschlußleitungen (12) sind an den Heizwiderstand in einem abgestuften, eine geringere Querabmessung aufweisenden Bereich (14) angelötet, der bis in die Öffnung (13) des Bodens des Gehäuses (10) hineinreicht. Die Öffnung (13) ist ferner mit einer umlaufenden Ringnut (15) versehen.

Die Öffnung (13) des Bodens des Gehäuses (10) ist mit einem eingespritzten Sockel (17) aus Kunststoff verschlossen. Dieser Sockel (17) füllt die Ringnut (15) aus und überdeckt den Boden und den unteren Randbereich der Innenwandung des Gehäuses (10). Dabei faßt er auch den unteren Rand des Trägerkörpers (11) des elektrischen Heizelementes ein und insbesondere den Ansatz (14), der die Lötstellen für die Anschlußleitungen (12) aufweist. Der Sockel (17) weist einen Ansatz (18) auf, der aus dem Boden des Gehäuses (10) hinausragt und die Anschlußleitungen (12) umhüllt, die mit einem Teil ihrer Isolierungen (19) noch von dem Sockel (17) umhüllt sind. Die äußeren Enden der Anschlußleitungen (12) sind von der Isolierung befreit. Sie sind verdrillt und verzinkt.

Um den Sockel (17) herstellen zu können, wird eine Gießform geschaffen, die teilweise aus dem Gehäuse (10) gebildet wird. Der Trägerkörper (11) ist in eine Aussparung eines der Innenkontur des Gehäuses (10) entsprechenden Kerns (20) so eingesteckt, daß er mit seinem unteren Randbereich und dem Ansatz (14) mit den Lötstellen der Anschlußleitungen (12) aus dem Kern (20) herausragt. Der Kern (20) wird in das Gehäuse (10) eingesteckt, wobei er sich an einem Ringbund (21) des Gehäuses (10) dichtend abstützt. Der Außenseite des Bodens des Gehäuses (13) ist ein Formenteil (22) zugeordnet, das mit einer Aussparung (23) für den Ansatz (18) verbunden ist. Dieses Formenteil (22) besteht bevorzugt aus zwei in der Zeichnungsebene geteilten Teilen, die jeweils zwei halbschalige Aussparungen zum Herausführen der mit Isolierungen (19) versehenen Anschlußleitungen (12) versehen sind. Da der Kern (20) sich auf dem Ringbund (21) abstützt, kann zwischen den Formenteilen (22) und dem Kern (20) eine ausreichende Schließkraft aufgebracht werden. Die Formenteile (22) enthalten in nicht näher dargestellter Weise die Einspritzöffnungen, durch die das Einspritzen des den Sockel (17) bildenden Kunststoffmaterials erfolgt.

Um den Trägerkörper (11) mit dem Heizwiderstand so dicht in den Kern (20) zu halten, daß bei dem Spritzvorgang kein Kunststoff in den Bereich der den Trägerkörper (11) aufnehmenden Aussparung eintritt, wird zweckmäßigerweise vorgesehen, daß der Kern (20) mit einem zangenförmigen Spannelement versehen ist. Das zangenförmige Spannelement besteht aus wenistens zwei Hälften, die mit U-förmigen Aussparungen versehen sind und die den klappenförmigen Trägerkörper (11) zwischen sich einspannen. Das Spannen des Spannelementes erfolgt mittels Konusflächen.

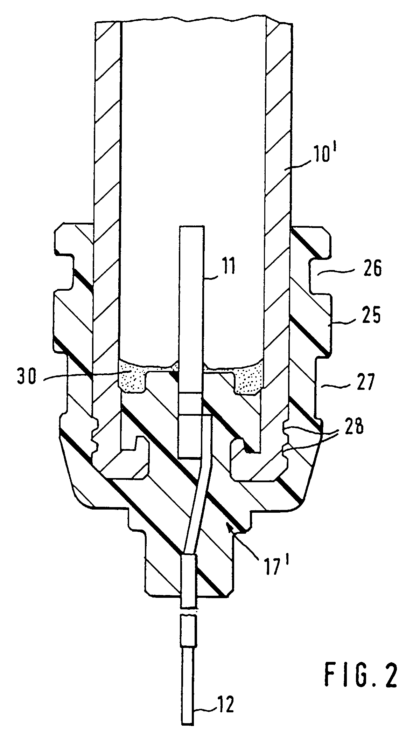

Bei dem Ausführungsbeispiel nach Figur 2 ist der in den Bodenbereich des Gehäuses (10') eingespritzte Sockel (17') mit einer mit ihm einteilig hergestellten Kappe (25) versehen, die das Gehäuse (10') ausgehend von dem Bodenbereich über eine gewisse axiale Länge außen einfaßt. Die Kappe ist mit Aufnahmen (26, 27) für Hilfsmittel versehen, beispielsweise für Dichtungsringe oder dergleichen. Das Gehäuse (10') ist im Bereich der Kappe (25) mit Verankerungsrillen (28) versehen.

Vor dem Einspritzen des Sockels werden die Wandungen des unteren Bereiches des Gehäuses (10') und vorzugsweise auch der zu umspritzende Bereich des Trägerkörpers (11) und die Anschlußdrähte (12) mit einem Haftvermittler versehen, der für eine innige Kunststoff-Metall-Verbindung geeignet ist. Ein derartiger Haftvermittler kann durch Tauchen, Sprühen, Walzen oder Bestreichen aufgebracht werden.

Wie bei dem Ausführungsbeispiel nach Figur 2 dargestellt ist, ist es vorteilhaft, in das Innere des Gehäuses (10') eine Abdichtmasse (30) einzubringen, die den Sockel (17') gegenüber den Innenwandungen des Gehäuses (10') und auch den Sockel (17') gegenüber dem Trägerkörper (11) des Heizelementes zusätzlich abdichtet. In einem derartigen thermostatischen Arbeitselement können Drücke von über 100 bar auftreten. Außerdem liegt der Einsatzbereich eines derartigen thermostatischen Arbeitselementes, insbesondere wenn es in Verbindung mit einem Thermostatventil einer Kühlanlage eines Verbrennungsmotors eines Kraftfahrzeuges eingesetzt wird, zwischen -40°C und +150°C. Diese Abdichtmasse (30), die in flüssiger oder zähflüssiger Form eingebracht wird, besteht vorzugsweise aus einem auspolymerisierbaren Kunststoff, der auch als Zweikomponentenmasse eingebracht wird. Es ist vorteilhaft, wenn dieser Kunststoff, beispielsweise Silikon, dauerelastische Eigenschaften behält und eine klebende Verbindung zu dem Kunststoff des Sockels (17') sowie zu dem Metall des Gehäuses (10') sowie auch zu dem Trägerkörper (11) herstellt, der aus Keramik oder einem anderen, elektrisch nicht leitenden, wärmebeständigen Material besteht.

Selbstverständlich ist es auch möglich, andere elektrische Heizelemente in entsprechender Weise anzuordnen und mit einem angespritzten Sockel zu halten, beispielsweise pillenförmige PTC-Heizwiderstände.

## Patentansprüche

1. Thermostatisches Arbeitselement mit einem Gehäuse zur Aufnahme eines Dehnstoffs, in welchem ein elektrisches Heizelement angeordnet ist, das mit Anschlußleitungen versehen ist, die in einem sie umhüllenden, eine Öffnung des Bodens des Gehäuses verschließenden Sockel aus Kunststoff nach außen geführt sind, dadurch gekennzeichnet, daß der Sockel (17) in die Öffnung (13) des Bodens des Gehäuses (10) eingespritzt ist.

2. Thermostatisches Arbeitselement nach Anspruch 1, dadurch gekennzeichnet, daß der in den Boden eingespritzte Sockel (17) mit einem die Anschlußleitungen (12) umhüllenden Ansatz (18) nach außen ragt.

3. Thermostatisches Arbeitselement nach Anspruch 2, dadurch gekennzeichnet, daß die Anschlußleitungen (12) mit einer Isolierung (19) versehen sind, die in den Ansatz (18) des Sockels (17) hineinragt.

4. Thermostatisches Arbeitselement nach einem der Ansprüche 1 bis 3, dadurch gekennzeichnet, daß der angespritzte Sockel (17) einen dem Boden des Gehäuses (10) zugewandten Rand des Heizelementes (11) einfaßt.

5. Thermostatisches Arbeitselement nach einem der Ansprüche 1 bis 4, dadurch gekennzeichnet, daß der Sockel (17) im Innern des Gehäuses (10) den Boden überdeckt.

6. Thermostatisches Arbeitselement nach Anspruch 5, dadurch gekennzeichnet, daß der Sockel (17) im Innern des Gehäuses einen an den Boden anschließende Randbereich der Innenwandung des Gehäuses (10) überdeckt.

7. Thermostatisches Arbeitselement nach einem der Ansprüche 1 bis 6, dadurch gekennzeichnet, daß die Öffnung (13) des Bodens mit wenigstens einer umlaufenden Ringnut (15) versehen ist, die von dem Material des eingespritzten Sokkels (17) ausgefüllt ist.

8. Thermostatisches Arbeitselement nach einem der Ansprüche 1 bis 7, dadurch gekennzeichnet, daß die Anschlußleitungen (12) mittels Lötstellen mit einem elektrischen Heizwiderstand des elektrischen Heizelementes verbunden sind, die innerhalb des Sockels (17) liegen.

9. Thermostatisches Arbeitselement nach einem der Ansprüche 1 bis 8, dadurch gekennzeichnet, daß das Heizelement wenigstens einen Trägerkörper (11) aufweist, auf welchem wenigstens ein elektrischer Heizwiderstand schichtförmig angeordnet ist.

10. Thermostatisches Arbeitselement nach einem der Ansprüche 1 bis 9, dadurch gekennzeichnet, daß der in die Öffnung des Bodens des Gehäuses (10') eingespritzte Sockel (17') einteilig mit einer das Gehäuse außen einfassenden Kappe (25) hergestellt ist.

11. Thermostatisches Arbeitselement nach Anspruch 10, dadurch gekennzeichnet, daß die Kappe (25) mit wenigstens einer Aufnahme (26, 27) für ein Zusatzelement versehen ist.

12. Thermostatisches Arbeitselement nach einem der Ansprüche 1 bis 11, dadurch gekennzeichnet, daß der dem Innenraum des Gehäuses (10') zugewandte Bereich des Sockels (17') mit einer an die Innenwand des Gehäuses und/oder an die Außenflächen des Trägerkörpers (11) anschließenden Abdichtmasse (30) versehen ist.

13. Thermostatisches Arbeitselement nach Anspruch 12, dadurch gekennzeichnet, daß die Abdichtmasse (30) ein auspolymerisierbarer, vorzugsweise klebender Kunststoff ist.

14. Verfahren zum Einbringen eines elektrischen Heizelementes in ein Gehäuse eines thermostatischen Arbeitselementes, bei welchem Anschlußleitungen des Heizelementes in einem sie umhüllenden, eine Öffnung des Bodens des Gehäuses verschließenden Sockel aus Kunststoff nach außen geführt sind, dadurch gekennzeichnet, daß das mit den Anschlußleitungen versehene Heizelement in einem es einbettenden Kern gehalten und mit dem Kern in das Gehäuse eingeführt wird, wobei der Kern, das Gehäuse und ein Formenteil zu einer Gießform zusammengefügt werden, in die der die Öffnung des Bodens verschließende und die Anschlußleitungen umhüllende Sockel aus Kunststoff eingespritzt wird.

15. Verfahren nach Anspruch 14, dadurch gekennzeichnet, daß vor dem Einspritzen des Sockels die Wandungen des Gehäuses und/oder die zu umspritzende Fläche des Trägerkörpers des Heizelementes mit einem Haftvermittler versehen werden.

16. Verfahren nach Anspruch 14 oder 15, dadurch gekennzeichnet, daß der Kern mit einem zangenförmigen Spannelement versehen ist, das während des Spritzens des Sockels den die Spritzform begrenzenden Randbereich des Trägerkörpers umspannt.

## Claims

1. Thermostatic working element with a housing to accommodate an expansion medium, in which is arranged an electric heating element provided with connection leads which pass outwards through a plastic base that surrounds them and closes an opening in the bottom of the housing,
**characterised in that**
the base (17) is injection-moulded in the opening (13) at the bottom of the housing.

2. Thermostatic working element according to Claim 1,
**characterised in that**
the base (17) injection moulded at the bottom projects outwards in an extension (18) which surrounds the connection leads (12).

3. Thermostatic working element according to Claim 2,
**characterised in that**
the connection leads (12) are provided with insulation (19) which extends into the extension (18) ofthe base (17).

4. Thermostatic working element according to any of Claims 1 to 3,
**characterised in that**
the injection-moulded base (17) encloses an edge of the heating element (11) facing towards the bottom of the housing (10).

5. Thermostatic working element according to any of Claims 1 to 4,
**characterised in that**
the base (17) covers the bottom on the inside of the housing (10).

6. Thermostatic working element according to Claim 5,
**characterised in that**
inside the housing, the base (17) covers an edge area of the inside wall of the housing (10) adjacent to the bottom.

7. Thermostatic working element according to any of Claims 1 to 6,
**characterised in that**
the opening (13) at the bottom is provided with at least one circumferential annular groove (15), which is filled by the material of the injection-moulded base (17).

8. Thermostatic working element according to any of Claims 1 to 7,
**characterised in that**
the connection leads (12) are connected by soldered joints to an electrical heating resistance of the electric heating element, the said soldered joints being located within the base (17).

9. Thermostatic working element according to any of Claims 1 to 8,
**characterised in that**
the heating element comprises at least one supporting body (11) on which is arranged at least one electrical heating resistance in the form of a layer.

10. Thermostatic working element according to any of Claims 1 to 9,
**characterised in that**
the base (17') injection moulded in the opening of the housing (10') is made as one piece with a cap (25) which covers the housing on the outside.

11. Thermostatic working element according to Claim 10,
**characterised in that**
the cap (25) is provided with at least one fixing means (26, 27) for an additional element.

12. Thermostatic working element according to any of Claims 1 to 11,
**characterised in that**
the part of the base (17') facing towards the inside of the housing (10') is provided with a sealing mass (30) in contact with the inside wall of the housing and/or with the outside surfaces of the supporting body (11).

13. Thermostatic working element according to Claim 12,
**characterised in that**
the sealing mass (30) is a polymerisable, preferably adhesive plastic.

14. Method for the incorporation of an electric heating element in a housing of a thermostatic working element, in which connection leads of the heating element pass outwards through a plastic base that surrounds them and closes off an opening in the bottom of the housing,
**characterised in that**
the heating element provided with the connection leads is held by a core in which it is embedded and is inserted into the housing together with the core, and the core, the housing and a mould component are assembled to form a casting mould in which the plastic base that closes off the opening in the bottom and surrounds the connecting leads is injection moulded.

15. Method according to Claim 14,
**characterised in that**
before the base is injection moulded, the walls of the housing and/or the surfaces of the supporting body of the heating element to be enclosed by the moulding are coated with an adhesion promoter.

16. Method according to Claims 14 or 15,
**characterised in that**
the core is provided with a clamp-shaped gripping element, which grips the edge area of the supporting body that delimits the injection mould during the injection moulding of the base.

## Revendications

1. Actionneur thermostatique avec un boîtier pour recevoir une substance dilatante, dans lequel est disposé un élément de chauffage électrique, doté de lignes de raccordement, guidées vers l'extérieur dans un socle en matière synthétique les enveloppant, obturant une ouverture du fond du boîtier, caractérisé en ce que le socle (17) est injecté dans l'ouverture (13) du fond du boîtier (10).

2. Actionneur thermostatique selon la revendication 1, caractérisé en ce que le socle (17) injecté dans le fond fait saillie à l'extérieur par un appendice (18) enveloppant les lignes de raccordement (12).

3. Actionneur thermostatique selon la revendication 2, caractérisé en ce que les lignes de raccordement (12) sont dotées d'une isolation (19) qui pénètre dans l'appendice (18) du socle (17).

4. Actionneur thermostatique selon l'une des revendications 1 à 3, caractérisé en ce que le socle (17), raccordé d'un seul tenant par injection, enclôt un bord, tourné vers le fond du boîtier (10), de l'élément de chauffage (11).

5. Actionneur thermostatique selon l'une des revendications 1 à 4, caractérisé en ce que le socle (17) recouvre le fond à l'intérieur du boîtier (10).

6. Actionneur thermostatique selon la revendication 5, caractérisé en ce que le socle (17) recouvre à l'intérieur du boîtier une zone de bordure, se raccordant au fond, de la paroi intérieure du boîtier (10).

7. Actionneur thermostatique selon l'une des revendications 1 à 6, caractérisé en ce que l'ouverture (13) du fond est dotée d'au moins une gorge annulaire (15) de pourtour, qui est remplie du matériau du socle (17) injecté.

8. Actionneur thermostatique selon l'une des revendications 1 à 7, caractérisé en ce que les lignes de raccordement (12) sont reliées à une résistance chauffante électrique de l'élément de chauffage électrique par des points de brasage qui sont situés à l'intérieur du socle (17).

9. Actionneur thermostatique selon l'une des revendications 1 à 8, caractérisé en ce que l'élément de chauffage présente au moins un corps support (11), sur lequel au moins une résistance chauffante électrique est disposée en forme de couche.

10. Actionneur thermostatique selon l'une des revendications 1 à 9, caractérisé en ce que le socle (17') injecté dans l'ouverture du fond du boîtier (10') est fabriqué d'une seule pièce, avec un capuchon (25) enclosant extérieurement le boîtier.

11. Actionneur thermostatique selon la revendication 10, caractérisé en ce que le capuchon (25) est doté d'au moins un logement (26, 27) pour un élément additionnel.

12. Actionneur thermostatique selon l'une des revendications 1 à 11, caractérisé en ce que la zone, tournée vers l'espace intérieur du boîtier (10'), du socle (17') est dotée d'une masse d'étanchéité (30) se raccordant à la paroi intérieure du boîtier et/ou aux surfaces extérieures du corps support (11).

13. Actionneur thermostatique selon la revendication 12, caractérisé en ce que la masse d'étanchéité (30) est une matière synthétique polymérisable, de préférence adhésive.

14. Procédé d'introduction d'un élément de chauffage électrique dans un boîtier d'un actionneur thermostatique, dans lequel des lignes de raccordement de l'élément de chauffage sont guidées vers l'extérieur dans un socle en matière synthétique les enveloppant, obturant une ouverture du fond du boîtier, caractérisé en ce que l'élément de chauffage doté des lignes de raccordement est maintenu dans un noyau le noyant et est introduit avec le noyau dans le boîtier, où le noyau, le boîtier et une pièce de forme sont assemblés pour constituer un moule de coulée, dans lequel le socle en matière synthétique, obturant les ouvertures du fond et enveloppant les lignes de raccordement, est injecté.

15. Procédé selon la revendication 14, caractérisé en ce que, avant l'injection du socle, les parois du boîtier et/ou la surface à enrober par injection du corps support de l'élément de chauffage est dotée d'un agent adhésif.

16. Procédé selon la revendication 14 ou 15, caractérisé en ce que le noyau est doté d'un élément de serrage en forme de pince, qui, pendant l'injection du socle, entoure en la serrant la zone de bordure, délimitant le moule d'injection, du corps support.
